# EUROPÄISCHE PATENTANMELDUNG

(11) **EP 4 527 647 A1**
(43) Veröffentlichungstag der Anmeldung: **26.03.2025**
(21) Anmeldenummer: 24191467.0
(22) Anmeldetag: 29.07.2024
(51) Int. Cl.: B60J 1/20

(54) **ROLLOANORDNUNG FÜR EIN FENSTER EINES CAMPINGFAHRZEUGS**

(30) Priorität: 25.08.2023 DE 102023122843
(71) Anmelder: BOS Technology Services GmbH, 73760 Ostfildern (DE)
(72) Erfinder: Späth, Nico, 73773 Aichwald (DE); Reichel, Johannes, 34289 Zierenberg (DE)
(74) Vertreter: Patentanwälte Ruff, Wilhelm, Beier, Dauster & Partner mbB

(57) **Zusammenfassung**

2.1 Eine derartige Rolloanordnung aufweisend ein Wickelwellengehäuse, das zur Montage in einem hinter einer Innenverkleidung des Campingfahrzeugs verborgenen Bauraum eingerichtet ist, eine Wickelwelle, die drehbar in dem Wickelwellengehäuse gelagert ist, eine Rollobahn, die einends aufwickelbar und abwickelbar an der Wickelwelle gehalten ist, und ein Auszugprofil, das andernends an der Rollobahn befestigt ist, wobei mittels einer Bewegung des Auszugprofils entlang einer Auszugrichtung die Rollobahn verlagerbar ist zwischen einer Beschattungsstellung, in welcher die Rollobahn zur Beschattung des Fensters von der Wickelwelle abgewickelt und durch einen Auszugspalt der Innenverkleidung aus dem Bauraum herausgezogen ist, und einer Freigabestellung, in welcher die Rollobahn zur Freigabe des Fensters auf der Wickelwelle aufgewickelt ist, ist bekannt.

2.2 Erfindungsgemäß ist ein Handhabungselement zur manuellen Bewegung des Auszugprofils vorhanden und weist eine Aufnahmeaussparung auf, in welcher ein Aufnahmeabschnitt des Auszugprofils unter Ausbildung einer lösbaren formschlüssigen Verbindung aufgenommen ist, um das Handhabungselement abnehmbar an dem Auszugprofil anzubringen.

2.3 Verwendung im Innenraum eines Campingfahrzeugs.

## Beschreibung

Die Erfindung betrifft eine Rolloanordnung für ein Fenster eines Campingfahrzeugs, aufweisend ein Wickelwellengehäuse, das zur Montage in einem hinter einer Innenverkleidung des Campingfahrzeugs verborgenen Bauraum eingerichtet ist, eine Wickelwelle, die drehbar in dem Wickelwellengehäuse gelagert ist, eine Rollobahn, die einends aufwickelbar und abwickelbar an der Wickelwelle gehalten ist, und ein Auszugprofil, das andernends an der Rollobahn befestigt ist, wobei mittels einer Bewegung des Auszugprofils entlang einer Auszugrichtung die Rollobahn verlagerbar ist zwischen einer Beschattungsstellung, in welcher die Rollobahn zur Beschattung des Fensters von der Wickelwelle abgewickelt und durch einen Auszugspalt der Innenverkleidung aus dem Bauraum herausgezogen ist, und einer Freigabestellung, in welcher die Rollobahn zur Freigabe des Fensters auf der Wickelwelle aufgewickelt ist.

Solche Rolloanordnungen sind im Stand der Technik bekannt und werden bei Campingfahrzeugen unterschiedlicher Bauart eingesetzt. Das Wickelwellengehäuse wird hierbei üblicherweise hinter einer Innenverkleidung des Campingfahrzeugs in einem hierfür vorgesehenen Bauraum montiert. Der zur Verfügung stehende Bauraum variiert je nach Bauweise des Campingfahrzeugs und ist insbesondere von der Art und der Anbringung der Innenverkleidung abhängig. Entsprechendes gilt für die Dimensionierung des Auszugspalts, wobei auch aus optischen Gründen üblicherweise möglichst schmale Auszugspalte gewünscht sind.

Aufgabe der Erfindung ist es, eine Rolloanordnung der eingangs genannten Art bereitzustellen, die möglichst universell für unterschiedlichste Campingfahrzeuge verwendbar ist.

Diese Aufgabe wird dadurch gelöst, dass ein Handhabungselement zur manuellen Bewegung des Auszugprofils vorhanden ist und eine Aufnahmeaussparung aufweist, in welcher ein Aufnahmeabschnitt des Auszugprofils unter Ausbildung einer lösbaren formschlüssigen Verbindung aufgenommen ist, um das Handhabungselement abnehmbar an dem Auszugprofil anzubringen. Es hat sich gezeigt, dass die abnehmbare Anbringung des Handhabungselements eine deutlich vereinfachte und zudem universelle Montierbarkeit der Rolloanordnung ermöglicht. Dies gilt insbesondere dann, wenn der Auszugspalt der Innenverkleidung möglichst schmal sein soll. In diesem Fall wird zwecks Montage zunächst das Handhabungselement von dem Auszugprofil abgenommen. Hiernach kann das Wickelwellengehäuse gemeinsam mit der Wickelwelle und der aufgewickelten Rollobahn und dem an dieser befestigten Auszugprofil in dem hinter der Innenverkleidung verborgenen Bauraum montiert werden. Das Auszugprofil wird hiernach, gegebenenfalls unter Zuhilfenahme eines speziellen Werkzeugs, durch den Auszugspalt aus dem Bauraum herausgezogen. In diesem herausgezogenen Zustand kann das Handhabungselement an dem Auszugprofil angebracht werden. Das abnehmbare Handhabungselement ermöglicht es, den Auszugspalt möglichst schmal zu dimensionieren. Zur abnehmbaren Anbringung des Handhabungselements an dem Auszugprofil sind die Aufnahmeaussparung und der Aufnahmeabschnitt vorhanden. Die Aufnahmeaussparung ist an dem Handhabungselement ausgebildet. Der Aufnahmeabschnitt bildet einen Abschnitt des Auszugprofils. Der Aufnahmeabschnitt ist zur Anbringung des Handhabungselements an dem Auszugprofil in der Aufnahmeaussparung lösbar formschlüssig aufnehmbar. Die besagte lösbare formschlüssige Verbindung ist vorzugsweise wenigstens entlang der Auszugrichtung des Auszugprofils wirksam. Hierdurch wird vermieden, dass die formschlüssige Verbindung sich bei einer manuellen Betätigung des Auszugprofils mittels des Handhabungselements ungewollt löst. Vorzugsweise ist der Aufnahmeabschnitt axial mittig an dem Auszugprofil angeordnet. Dies jedenfalls dann, wenn exakt ein Handhabungselement vorhanden ist. Es ist möglich, dass mehrere Handhabungselemente abnehmbar an dem Auszugprofil angebracht sind. In diesem Fall weist das Auszugprofil eine dementsprechende Anzahl an Aufnahmeabschnitten auf, wobei für eine beidhändige manuelle Bedienung vorzugsweise exakt zwei Handhabungselemente und zwei Aufnahmeabschnitte vorhanden sind. Die Innenverkleidung ist nicht Bestandteil der Rolloanordnung. Vorzugsweise ist die Wickelwelle in Richtung einer aufgewickelten Position der Rollobahn, das heißt der Freigabestellung, vorgespannt. Zur Vorspannung sind im Stand der Technik unterschiedliche Mechanismen bekannt, beispielsweise Federmotoren oder dergleichen.

In Ausgestaltung der Erfindung sind die Aufnahmeaussparungen des Handhabungselements und der Aufnahmeabschnitt des Auszugprofils komplementär gestaltet und wirken unter Ausbildung einer lösbaren Rastverbindung zusammen. Zum Abnehmen des Handhabungselements kann die Rastverbindung gelöst werden. Zum Anbringen des Handhabungselements wird die Rastverbindung ausgebildet. Die Rastverbindung kann auch als Schnappverbindung oder Clipsverbindung bezeichnet werden. Bei dieser Ausgestaltung ist die Aufnahmeaussparung vorzugsweise begrenzt elastisch nachgiebig. Die elastische Nachgiebigkeit ermöglicht es, das Handhabungselement, vorzugsweise radial, auf den Aufnahmeabschnitt des Auszugprofils aufzurasten.

In weiterer Ausgestaltung der Erfindung weisen die Aufnahmeaussparung und der Aufnahmeabschnitt jeweils einen kreisrunden Querschnitt auf. Eine Formgebung der Aufnahmeaussparung und des Aufnahmeabschnitts mit jeweils kreisrundem Querschnitt erlaubt eine besonders einfache und zuverlässige lösbare formschlüssige Verbindung. Bei dieser Ausgestaltung der Erfindung ist das Auszugprofil wenigstens im Bereich des Aufnahmeabschnitts mit einem kreisrunden Querschnitt versehen.

In weiterer Ausgestaltung der Erfindung ist das Auszugprofil ein kreiszylindrischer Auszugstab. Das Auszugprofil ist bei dieser Ausgestaltung demnach nicht lediglich im Bereich des Aufnahmeabschnitts mit einem kreisrunden Querschnitt versehen. Vielmehr ist das gesamte Auszugprofil mit kreisrundem Querschnitt ausgeführt. Dies erlaubt eine einfache und kostengünstige Fertigung.

In weiterer Ausgestaltung der Erfindung weist das Handhabungselement eine Einführöffnung auf, die zum Einführen des Aufnahmeabschnitts in die Aufnahmeaussparung entlang einer Einführrichtung radial in die Aufnahmeaussparung mündet, wobei die Einführrichtung quer, vorzugsweise orthogonal, zu der Auszugrichtung des Auszugprofils orientiert ist. Die radial in die Aufnahmeaussparung mündende Einführöffnung erlaubt eine nochmals vereinfachte Anbringung des Handhabungselements an dem Auszugprofil. Dies insbesondere zu einer grundsätzlich denkbaren und möglichen axialen Anbringung, bei welcher das Handhabungselement axial auf das Auszugprofil aufgeschoben wird, um den Aufnahmeabschnitt in die Aufnahmeaussparung einzuführen. Die Einführrichtung ist quer, vorzugsweise orthogonal, zu der Auszugrichtung orientiert. Hierdurch kann auf besonders zuverlässige Weise vermieden werden, dass die formschlüssige Verbindung sich bei einem manuellen Bewegen des Auszugprofils entlang der Auszugrichtung unbeabsichtigt löst. Vorzugsweise ist eine lichte Weite der Einführöffnung kleiner als ein Durchmessermaß des Aufnahmeabschnitts und/oder des Auszugprofils. Eine solche Bemessung der Einführöffnung unterstützt das Ausbilden einer zuverlässigen formschlüssigen Verbindung, insbesondere Rastverbindung.

In weiterer Ausgestaltung der Erfindung weist das Handhabungselement wenigstens einen Anschlagabschnitt auf, der dazu eingerichtet ist, in der Freigabestellung der Rollobahn an einem an dem Auszugspalt angrenzenden Abschnitt der Innenverkleidung anzuliegen, um ein über die Freigabestellung hinausgehendes Aufwickeln der Rollobahn und/oder eine Verlagerung des Auszugprofils in den hinter der Innenverkleidung verborgenen Bauraum zu verhindern. Mit anderen Worten ausgedrückt, liegt der Anschlagabschnitt - jedenfalls in montiertem Zustand der Rolloanordnung - in der Freigabestellung der Rollobahn an dem besagten Abschnitt der Innenverkleidung an. Durch diesen Kontakt zwischen dem Anschlagabschnitt und der Innenverkleidung wird verhindert, dass das Auszugprofil, insbesondere vollständig, in den hinter der Innenverkleidung liegenden Bauraum verlagert wird. Durch die Ausstattung des Handhabungselements mit dem besagten Anschlagabschnitt kann auf gesonderte Anschlagelemente oder dergleichen verzichtet werden. Dies ermöglicht einen besonders einfachen Aufbau der Rolloanordnung. Es versteht sich, dass das Handhabungselement mehrere Anschlagabschnitte aufweisen kann, die in der Freigabestellung vorzugsweise auf in Querrichtung des Auszugspalts einander gegenüberliegenden Seiten des Auszugspalts an der Innenverkleidung anliegen.

In weiterer Ausgestaltung der Erfindung weist das Handhabungselement einen Hakenabschnitt auf, der zum lösbaren Einhaken an einem hierfür vorgesehenen Abschnitt der Innenverkleidung in der Beschattungsstellung der Rollobahn eingerichtet ist, um einem unbeabsichtigten Aufwickeln der Rollobahn in die Freigabestellung entgegenzuwirken, wobei der Anschlagabschnitt durch ein Stirnende des Hakenabschnitts gebildet ist. In der Beschattungsstellung kann der Hakenabschnitt an dem besagten Abschnitt der Innenverkleidung eingehakt werden, um die Rollobahn in ihrer abgewickelten Position zur Beschattung des Fensters zu fixieren. In der Freigabestellung fungiert das Stirnende des Hakenabschnitts als Anschlagabschnitt. Durch diese Mehrfachfunktion des Hakenabschnitts und/oder des Anschlagabschnitts wird ein nochmals vereinfachter Aufbau erreicht.

In weiterer Ausgestaltung der Erfindung weist das Handhabungselement einen Griffabschnitt auf, der zum manuellen Greifen eingerichtet ist und dem Anschlagabschnitt entlang einer Haupterstreckungsrichtung des Handhabungselements gegenüberliegt. In montiertem Zustand der Rolloanordnung ist die Haupterstreckungsrichtung des Handhabungselements vorzugsweise orthogonal zu einer Längsrichtung des Auszugspalts orientiert. Vorzugsweise ist das Handhabungselement in der Freigabestellung in Querrichtung des Auszugspalts über diesen hinweg erstreckt. Vorzugsweise ist ein auf die Haupterstreckungsrichtung bezogenes Haupterstreckungsmaß des Handhabungselements 1,5-fach bis 15-fach, bevorzugt 2-fach bis 10-fach, besonders bevorzugt 4-fach bis 8-fach, größer als eine Breite des Auszugspalts.

In weiterer Ausgestaltung der Erfindung ist ein Haupterstreckungsmaß des Handhabungselements größer als ein Durchmessermaß des Wickelwellengehäuses. Mit anderen Worten ausgedrückt, ist das Wickelwellengehäuse im Vergleich zu dem Handhabungselement besonders kompakt. Dies unterstützt die universelle Verwendbarkeit der Rolloanordnung für Campingfahrzeuge mit unterschiedlich dimensionierten Bauräumen zur Montage des Wickelwellengehäuses.

In weiterer Ausgestaltung der Erfindung ist das Handhabungselement einstückig gefertigt. Dabei ist das Handhabungselement vorzugsweise aus einem Kunststoffmaterial gefertigt. Diese Ausgestaltung der Erfindung ermöglicht eine kostengünstige Herstellung des Handhabungselements in großen Stückzahlen.

Die Erfindung betrifft zudem eine Anordnung mit einer Rolloanordnung gemäß der vorhergehenden Beschreibung und mit einer Innenverkleidung eines Campingfahrzeugs, wobei das Wickelwellengehäuse in einem hinter der Innenverkleidung verborgenen Bauraum montiert ist, wobei die Rollobahn sich bei einer Verlagerung zwischen der Beschattungsstellung und der Freigabestellung durch einen Auszugspalt der Innenverkleidung erstreckt, und wobei das Handhabungselement in der Freigabestellung im Bereich des Auszugspalts an der Innenverkleidung anliegt, wodurch ein über die Freigabestellung hinausgehendes Aufwickeln der Rollobahn und/oder eine Verlagerung des Auszugprofils in den hinter der Innenverkleidung verborgenen Bauraum verhindert ist. Hinsichtlich der weiteren Gestaltung der Rolloanordnung und ihrer Bauteile wird zur Vermeidung von Wiederholungen auf die vorhergehende Offenbarung verwiesen. Das dort zu der erfindungsgemäßen Rolloanordnung und deren Ausgestaltungen Gesagte gilt, mutatis mutandis, auch für die Rolloanordnung der erfindungsgemäßen Anordnung.

Die Erfindung betrifft zudem ein Campingfahrzeug mit einer Anordnung gemäß der vorhergehenden Beschreibung. Vorzugsweise handelt es sich bei dem Campingfahrzeug um ein Wohnmobil, im Speziellen um einen Campervan. Alternativ kann es sich bei dem Campingfahrzeug um einen Wohnanhänger handeln.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in schematischer Perspektivansicht einen Abschnitt einer Ausführungsform eines erfindungsgemäßen Campingfahrzeugs im Bereich eines Seitenfensters, wobei das Seitenfenster mit einer Ausführungsform einer erfindungsgemäßen Rolloanordnung ausgestattet ist,
- Fig. 2: die schematischer Perspektivansicht nach Fig. 1 in freigeschnittenem Zustand,
- Fig. 3, 4: schematische Querschnittsansichten der Rolloanordnung in einer Freigabestellung mit abgenommenem Handhabungselement (Fig. 3) und mit angebrachtem Handhabungselement (Fig. 4), und
- Fig. 5: eine schematische Innenansicht der Rolloanordnung in einer Beschattungsstellung,

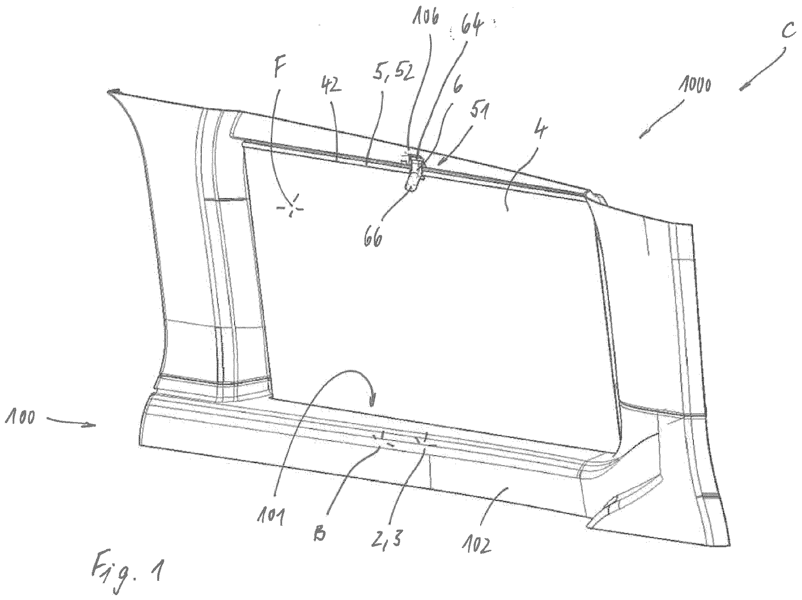

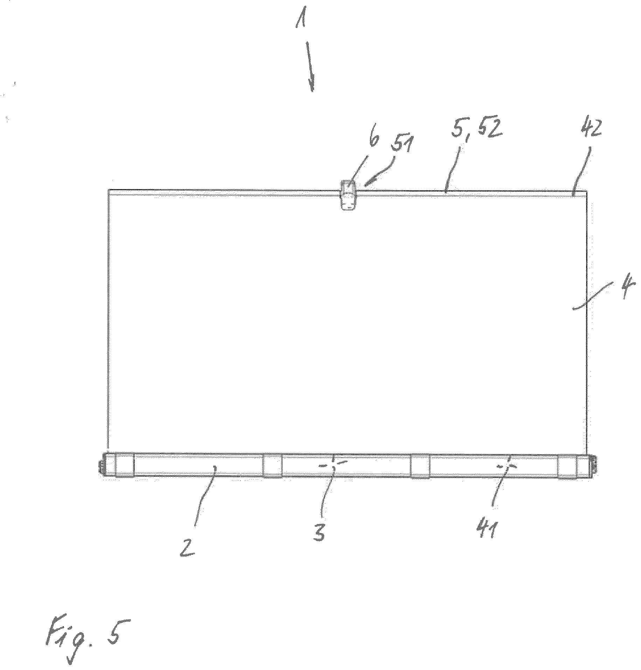

Fig. 1 zeigt eine Anordnung 1000 mit einer Rolloanordnung 1, die im Detail in Fig. 5 gezeigt ist, und mit einer Innenverkleidung 100.

Die Anordnung 1000 ist Bestandteil eines im Übrigen nicht näher gezeigten Campingfahrzeugs C.

Bei dem Campingfahrzeug C handelt es sich vorliegend um ein Wohnmobil in Form eines Campervans.

Die Rolloanordnung 1 dient der Beschattung eines Fensters F des Campingfahrzeugs C. Das Fenster F ist von der Innenverkleidung 100 berandet und in der in Fig. 1 gezeigten Konfiguration mittels einer Rollobahn 4 der Rolloanordnung beschattet.

Die Rolloanordnung 1 weist ein Wickelwellengehäuse 2, eine Wickelwelle 3, die besagte Rollobahn 4, ein Auszugprofil 5 und ein Handhabungselement 6 auf (siehe insbesondere Fig. 5).

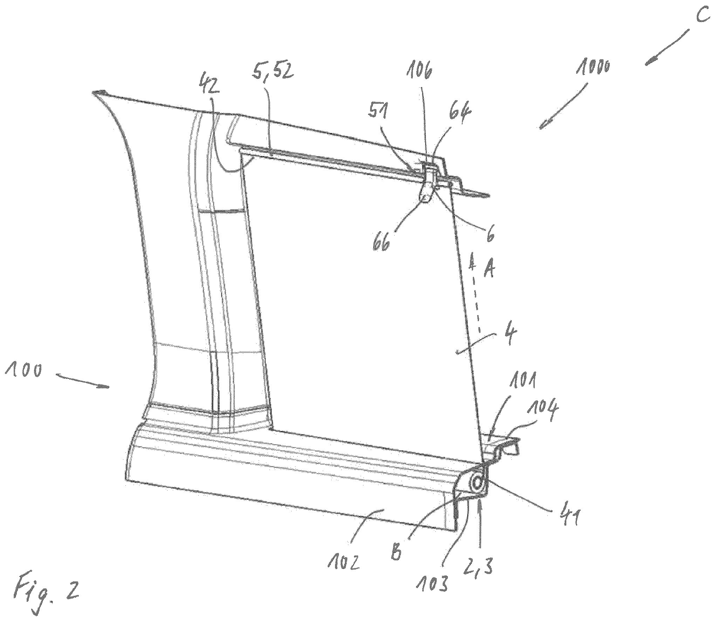

Das Wickelwellengehäuse 2 ist zur Montage in einem hinter der Innenverkleidung 100 des Campingfahrzeugs C verborgenen Bauraum B eingerichtet. Der montierte Zustand des Wickelwellengehäuses 2 ist insbesondere in den Fig. 2 bis 4 ersichtlich.

Die Wickelwelle 3 ist drehbar in dem Wickelwellengehäuse 2 gelagert.

Die Rollobahn 4 ist einends, an ihrem ersten Ende 41, aufwickelbar und abwickelbar an der Wickelwelle 3 gehalten.

Das Auszugprofil 5 ist andernends der Rollobahn 4, an einem dem ersten Ende 41 gegenüberliegenden zweiten Ende 42 der Rollobahn 4, an der Rollobahn 4 befestigt.

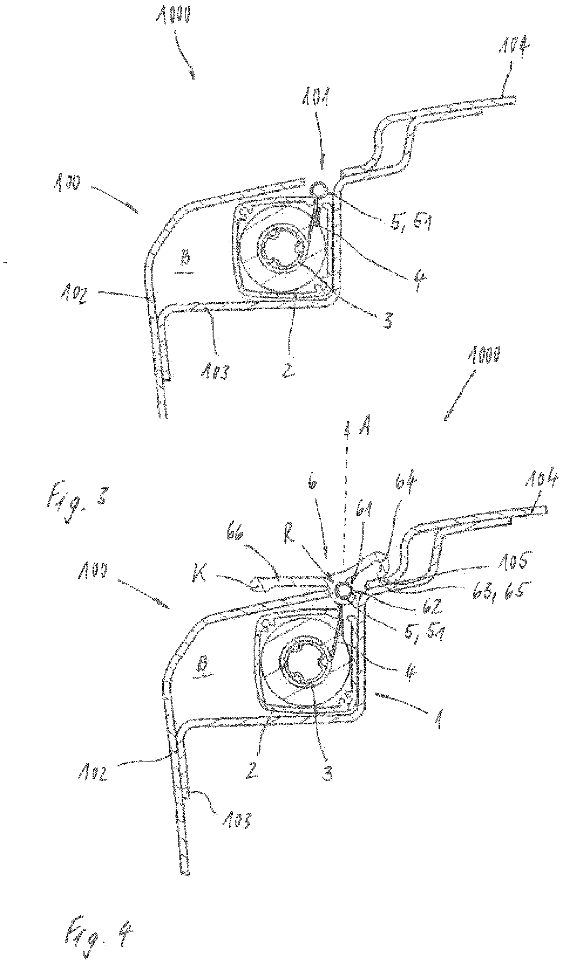

Die Rollobahn 4 ist mittels einer Bewegung des Auszugprofils 5 entlang einer Auszugrichtung A (siehe Fig. 2, 4) zwischen der in den Fig. 1, 2 und 5 gezeigten Beschattungsstellung und einer Freigabestellung (siehe Fig. 3, 4) verlagerbar. In der Beschattungsstellung ist die Rollobahn 4 zur Beschattung des Fensters F von der Wickelwelle 3 abgewickelt und durch einen Auszugspalt 101 der Innenverkleidung 100 aus dem Bauraum B herausgezogen. In der Freigabestellung ist die Rollobahn 4 zur Freigabe des Fensters F auf der Wickelwelle 3 aufgewickelt.

Bei der gezeigten Ausführungsform ist der Bauraum B zwischen Verkleidungsteilen 102, 103, 104 der Innenverkleidung 100 ausgebildet. Dabei versteht sich, dass die in den Figuren gezeigte Anordnung und Formgebung der Verkleidungsteile 102, 103, 104 rein exemplarisch ist.

Der Auszugspalt 101 ist bei der gezeigten Ausführungsform zwischen einander gegenüberliegenden Stirnenden (ohne Bezugszeichen) der Verkleidungsteile 102, 104 ausgebildet. Bei einer in den Figuren nicht gezeigten Ausführungsform ist der Auszugspalt 101 stattdessen in eines der Verkleidungsteile eingefräst.

Bei der gezeigten Ausführungsform ist der Bauraum B in einem Brüstungsbereich des Fensters F angeordnet. Bei einer in den Figuren nicht gezeigten Ausführungsform ist der Bauraum stattdessen an einem der Brüstung des Fensters F in Hochrichtung gegenüberliegenden Sturz (engl. window lintel) des Fensters F angeordnet.

Es hat sich gezeigt, dass eine möglichst schmale Ausführung des Auszugspalts 101 aus unterschiedlichen Gründen wünschenswert ist. Um dennoch eine einfache Montage der Rolloanordnung und eine ausreichend große und damit ergonomische Dimensionierung des Handhabungselements 6 zu gewährleisten, ist Letzteres abnehmbar an dem Auszugprofil 5 angebracht.

Zu diesem Zweck weist das Handhabungselement 6 eine Aufnahmeaussparung 61 auf, in welcher ein Aufnahmeabschnitt 51 des Auszugprofils 5 unter Ausbildung einer lösbaren formschlüssigen Verbindung aufgenommen ist (siehe insbesondere Fig. 4). Aufgrund des abnehmbar angebrachten Handhabungselements 6 kann die Rolloanordnung 1 zunächst ohne das Handhabungselement 6 in dem Bauraum B montiert werden. Dies ist in Fig. 3 gezeigt. Ausgehend von der in Fig. 3 gezeigten Situation kann das Auszugprofil 5 manuell oder unter Zuhilfenahme eines hierfür geeigneten Werkzeugs durch den Auszugspalt 101 nach außen gezogen und mit dem Handhabungselement 6 verbunden werden (Fig. 4). Infolgedessen kann der Auszugspalt 101 deutlich schmaler dimensioniert werden, als dies bei einer unlösbaren Anbringung des Handhabungselements 6 der Fall wäre. Damit einhergehend ist die Rolloanordnung 1 für unterschiedliche Campingfahrzeuge mit unterschiedlich dimensionierten Bauräumen und/oder Auszugspalten universell verwendbar.

Die Aufnahmeaussparung 61 und der Aufnahmeabschnitt 51 sind vorliegend komplementär gestaltet und wirken unter Ausbildung einer lösbaren Rastverbindung R zusammen. Die Rastverbindung R kann auch als Schnappverbindung oder Clipsverbindung bezeichnet werden.

Bei der gezeigten Ausführungsform ist das Auszugprofil 5 als kreiszylindrischer Auszugstab 52 gestaltet. Das Auszugprofil 5 weist folglich einen kreisrunden Querschnitt auf, wie insbesondere in den Fig. 3 und 4 gezeigt ist. Demnach weist auch der Aufnahmeabschnitt 51 einen solchen kreisrunden Querschnitt auf. Die Aufnahmeaussparung 61 ist hierzu komplementär gestaltet und weist ebenfalls einen kreisrunden Querschnitt auf.

Zur Anbringung des Handhabungselements 6 an dem Auszugprofil 5 ist es grundsätzlich denkbar, dass das Handhabungselement 6 mit der Aufnahmeaussparung 61 voran axial auf das Auszugprofil 5 aufgeschoben wird. Bei der gezeigten Ausführungsform ist stattdessen eine radiale Anbringung vorgesehen. Zu diesem Zweck weist das Handhabungselement 6 eine Einführöffnung 62 auf, die entlang einer Einführrichtung (ohne Bezugszeichen) radial in die Aufnahmeaussparung 61 mündet. Das Handhabungselement 6 kann folglich mit der Einführöffnung 62 voran radial auf das Auszugprofil 5, genauer: dessen Aufnahmeabschnitt 51, aufgerastet werden.

Die besagte Einführrichtung ist quer zu der Auszugrichtung A des Auszugprofils 5 orientiert. Hierdurch wird vermieden, dass die Rastverbindung R bei einer Bewegung entlang der Auszugrichtung A ungewollt gelöst wird.

Bei der gezeigten Ausführungsform weist das Handhabungselement 6 zudem einen Anschlagabschnitt 63 auf. Dieser ist dazu eingerichtet, in der Freigabestellung der Rollobahn 4 (siehe Fig. 4) an einem an dem Auszugspalt 101 angrenzenden Abschnitt 105 der Innenverkleidung 100 anzuliegen. Durch den Kontakt des Anschlagabschnitts 63 mit dem besagten Abschnitt 105 der Innenverkleidung 100 wird ein über die Freigabestellung hinausgehendes Aufwickeln der Rollobahn 4 verhindert. Zudem wird verhindert, dass das Auszugprofil 5 unbeabsichtigt in den hinter der Innenverkleidung 100 liegenden Bauraum B verlagert wird. Das Handhabungselement 6 fungiert folglich zusätzlich als eine Art Anschlag oder auch Begrenzungselement für das Auszugprofil 5.

Bei der gezeigten Ausführungsform weist das Handhabungselement 6 zudem einen Hakenabschnitt 64 auf. Der Hakenabschnitt 64 ist zum lösbaren Einhaken an einem hierfür vorgesehenen Abschnitt 106 der Innenverkleidung 100 in der Beschattungsstellung der Rollobahn 4 eingerichtet (siehe Fig. 1, 2). Durch das Einhaken des Hakenabschnitts 64 an dem besagten Abschnitt 106 wird einem unbeabsichtigten Aufwickeln der Rollobahn 4 in die Freigabestellung entgegengewirkt. Wie in Fig. 4 gezeigt ist, bildet ein Stirnende 65 des Hakenabschnitts 64 vorliegend den Anschlagabschnitt 63. Durch eine solche Gestaltung kann auf gesonderte Anschlagabschnitte verzichtet werden. Dies ermöglicht einen besonders einfachen und kostengünstigen Aufbau.

Bei der gezeigten Ausführungsform weist das Handhabungselement 6 zudem einen Griffabschnitt 66 auf, der zum manuellen Greifen des Handhabungselements 6 eingerichtet ist und dem Anschlagabschnitt 63 - und damit vorliegend auch dem Hakenabschnitt 64 - entlang einer Haupterstreckungsrichtung (ohne Bezugszeichen) des Handhabungselements 6 gegenüberliegt. Die Haupterstreckungsrichtung ist in der Zeichenebene der Fig. 4 erstreckt und jedenfalls in der Freigabestellung der Rollobahn 4 in etwa orthogonal zu der Auszugrichtung A und/oder parallel zu einer Querrichtung des Auszugspalts 101.

Bei der gezeigten Ausführungsform ist ein Haupterstreckungsmaß (ohne Bezugszeichen) des Handhabungselements 6 größer als ein Durchmessermaß (ohne Bezugszeichen) des Wickelwellengehäuses 2. Dies verdeutlicht die besonders kompakte Bauform der Rolloanordnung 1. Vorliegend beträgt das Haupterstreckungsmaß in etwa das 1,2- bis 1,5-fache des besagten Durchmessermaßes. Dies ist insbesondere in Fig. 4 ersichtlich.

Bei der gezeigten Ausführungsform ist das Handhabungselement 6 einstückig aus einem Kunststoffmaterial K gefertigt.

Im Übrigen ist der Handhabungsabschnitt 51 bei der gezeigten Ausführungsform in etwa mittig einer Längserstreckung des Auszugprofils 5 angeordnet. Eine solche mittige Anordnung des Aufnahmeabschnitts 51 ist insbesondere dann vorteilhaft, wenn lediglich ein Handhabungselement vorhanden ist. Bei einer in den Figuren nicht gezeigten Ausführungsform sind zwei Handhabungselemente zur beidhändigen manuellen Bewegung des Auszugprofils vorgesehen. In diesem Fall sind die Aufnahmeabschnitte vorzugsweise symmetrisch zu einer axialen Mitte des Auszugprofils angeordnet.

## Patentansprüche

1. Rolloanordnung (1) für ein Fenster (F) eines Campingfahrzeugs (C), aufweisend
ein Wickelwellengehäuse (3), das zur Montage in einem hinter einer Innenverkleidung (100) des Campingfahrzeugs (C) verborgenen Bauraum (B) eingerichtet ist,
eine Wickelwelle (3), die drehbar in dem Wickelwellengehäuse (2) gelagert ist,
eine Rollobahn (4), die einends aufwickelbar und abwickelbar an der Wickelwelle (3) gehalten ist, und
ein Auszugprofil (5), das andernends an der Rollobahn (4) befestigt ist,
wobei mittels einer Bewegung des Auszugprofils (5) entlang einer Auszugrichtung (A) die Rollobahn (4) verlagerbar ist zwischen einer Beschattungsstellung, in welcher die Rollobahn (4) zur Beschattung des Fensters (F) von der Wickelwelle (3) abgewickelt und durch einen Auszugspalt (101) der Innenverkleidung (100) aus dem Bauraum (B) herausgezogen ist, und einer Freigabestellung, in welcher die Rollobahn (4) zur Freigabe des Fensters (F) auf der Wickelwelle (3) aufgewickelt ist,
**dadurch gekennzeichnet, dass** ein Handhabungselement (6) zur manuellen Bewegung des Auszugprofils (5) vorhanden ist und eine Aufnahmeaussparung (61) aufweist, in welcher ein Aufnahmeabschnitt (51) des Auszugprofils (5) unter Ausbildung einer lösbaren formschlüssigen Verbindung aufgenommen ist, um das Handhabungselement (6) abnehmbar an dem Auszugprofil (5) anzubringen.

2. Rolloanordnung (1) nach Anspruch 1, **dadurch gekennzeichnet, dass** die Aufnahmeaussparung (61) des Handhabungselements (6) und der Aufnahmeabschnitt (51) des Auszugprofils (5) komplementär gestaltet sind und unter Ausbildung einer lösbaren Rastverbindung (R) zusammenwirken.

3. Rolloanordnung (1) nach Anspruch 1 oder 2, **dadurch gekennzeichnet, dass** die Aufnahmeaussparung (61) und der Aufnahmeabschnitt (51) jeweils einen kreisrunden Querschnitt aufweisen.

4. Rolloanordnung (1) nach Anspruch 3, **dadurch gekennzeichnet, dass** das Auszugprofil (5) ein kreiszylindrischer Auszugstab (52) ist.

5. Rolloanordnung (1) nach einem der vorhergehenden Ansprüche, **dadurch gekennzeichnet, dass** das Handhabungselement (6) eine Einführöffnung (62) aufweist, die zum Einführen des Aufnahmeabschnitts (51) in die Aufnahmeaussparung (61) entlang einer Einführrichtung radial in die Aufnahmeaussparung (61) mündet, wobei die Einführrichtung quer, vorzugsweise orthogonal, zu der Auszugrichtung (A) des Auszugprofils (5) orientiert ist.

6. Rolloanordnung (1) nach einem der vorhergehenden Ansprüche, **dadurch gekennzeichnet, dass** das Handhabungselement (6) wenigstens einen Anschlagabschnitt (63) aufweist, der dazu eingerichtet ist, in der Freigabestellung der Rollobahn (4) an einem an den Auszugspalt (101) angrenzenden Abschnitt (105) der Innenverkleidung (100) anzuliegen, um ein über die Freigabestellung hinausgehendes Aufwickeln der Rollobahn (4) und/oder eine Verlagerung des Auszugprofils (5) in den hinter der Innenverkleidung (100) verborgenen Bauraum (B) zu verhindern.

7. Rolloanordnung (1) nach Anspruch 6, **dadurch gekennzeichnet, dass** das Handhabungselement (6) einen Hakenabschnitt (64) aufweist, der zum lösbaren Einhaken an einem hierfür vorgesehenen Abschnitt (106) der Innenverkleidung (100) in der Beschattungsstellung der Rollobahn (4) eingerichtet ist, um einem unbeabsichtigten Aufwickeln der Rollobahn (4) in die Freigabestellung entgegenzuwirken, wobei der Anschlagabschnitt (63) durch ein Stirnende (65) des Hakenabschnitts (64) gebildet ist.

8. Rolloanordnung (1) nach Anspruch 6 oder 7, **dadurch gekennzeichnet, dass** das Handhabungselement (6) einen Griffabschnitt (66) aufweist, der zum manuellen Greifen eingerichtet ist und dem Anschlagabschnitt (63) entlang einer Haupterstreckungsrichtung des Handhabungselements (6) gegenüberliegt.

9. Rolloanordnung (1) nach einem der vorhergehenden Ansprüche, **dadurch gekennzeichnet, dass** ein Haupterstreckungsmaß des Handhabungselements (6) größer ist als ein Durchmessermaß des Wickelwellengehäuses (2).

10. Rolloanordnung (1) nach einem der vorhergehenden Ansprüche, **dadurch gekennzeichnet, dass** das Handhabungselement (6) einstückig, insbesondere aus einem Kunststoffmaterial (K), gefertigt ist.

11. Anordnung (1000) mit einer Rolloanordnung (1) nach einem der vorhergehenden Ansprüche und mit einer Innenverkleidung (100) eines Campingfahrzeugs (C), wobei das Wickelwellengehäuse (2) in einem hinter der Innenverkleidung (100) verborgenen Bauraum (B) montiert ist, wobei die Rollobahn (4) sich bei einer Verlagerung zwischen der Beschattungsstellung und der Freigabestellung durch einen Auszugspalt (101) der Innenverkleidung (100) erstreckt, und wobei das Handhabungselement (6) in der Freigabestellung im Bereich des Auszugspalts (101) an der Innenverkleidung (100) anliegt, wodurch ein über die Freigabestellung hinausgehendes Aufwickeln der Rollobahn (4) und/oder eine Verlagerung des Auszugprofils (5) in den hinter der Innenverkleidung (100) verborgenen Bauraum (B) verhindert ist.

12. Campingfahrzeug (C) mit einer Anordnung (1000) nach Anspruch 11.
